# EUROPEAN PATENT SPECIFICATION

(11) **EP 3 171 644 B1**
(45) Date of publication and mention of the grant of the patent: **30.12.2020**
(21) Application number: 16199513.9
(22) Date of filing: 18.11.2016
(51) Int. Cl.: H04W 48/18, H04W 36/00, H04W 48/16, H04W 36/14

(54) **METHOD AND APPARATUS FOR SELECTING NETWORK**
VERFAHREN UND VORRICHTUNG ZUR AUSWAHL EINES NETZES
PROCÉDÉ ET APPAREIL DE SÉLECTION D'UN RÉSEAU

(30) Priority: 20.11.2015 CN 201510813224
(43) Date of publication of application: 24.05.2017
(73) Proprietor: Xiaomi Inc., Beijing 100085 (CN)
(72) Inventor: HUANG, Jiangtao, Haidian District, Beijing 100085 (CN); WANG, Qiang, Beijing, 100085 (CN); SUN, Long, Beijing, 100085 (CN)
(74) Representative: Hughes, Andrea Michelle

(56) References cited:
- EP-A1- 2 249 608
- WO-A1-2009/004405
- WO-A1-2014/101349
- US-A1- 2008 176 565

## Description

### TECHNICAL FIELD

The present disclosure generally relates to the field of communication technology, and more particularly, to a method and an apparatus for selecting a network.

### BACKGROUND

Generally, mobile terminals supporting multimodes may reside on a network with different modes, such as 4G/3G/2G or the like. Taking a mobile phone as an example, due to reasons such as congestion and weak signals, the mobile phone may fall from a top-priority Long Term Evolution network to a 3G/2G network. In the related art, for example, in a 3GPP (3rd Generation Partnership Project), it is stipulated that if a network having higher priority than that of a current network is monitored, the mobile terminal needs to return to the network with higher priority. However, the problem lies in that, in some cases, the network side may provide no identifier on the priority. At this time, when the mobile terminal resides on a network with substantially lower priority while the network condition is good, a reselection condition is not satisfied, and thus even if there is a network with substantially higher priority, the mobile terminal will not quickly return to the network with substantially higher priority. EP 2249608A1 relates to a systems and methods for mobile stations to identify first and second radio access technologies and overcome being constrained. WO 2009/004405 A1 relates to a system and method for avoiding ping-pong handovers between a mobile station and a base station.

### SUMMARY

Accordingly, the present disclosure provides a method and an apparatus for selecting a network, in accordance with claims which follow.

In order to overcome problems in the related art, the present disclosure provides a method and an apparatus for selecting a network, so that the mobile terminal may quickly return to a network with substantially higher priority in a case where the network side does not provide identifiers on priority.

According to a first aspect, the present disclosure relates to a method for selecting a network described herein and defined in claim 1, including:
when a mobile terminal is unable to reside on a top-priority-network, recording a cell of the top-priority-network that the mobile terminal is currently unable to reside on, wherein the top-priority-network is determined based on a rule preset in the mobile terminal;
monitoring the top-priority-network when the mobile terminal is residing on a non-top-priority-network; and
if a cell of the top-priority-network is monitored and a relationship between the monitored cell and the previously recorded cell satisfies a preset condition, handing over the mobile terminal to the monitored cell, regardless of whether a current network connection state of the mobile terminal is in an idle state.

The preset condition includes:
the monitored cell not being the previously recorded cell.

The preset condition includes:
the monitored cell being the previously recorded cell, and an interval between a current time and a time when the mobile terminal left the previously recorded cell exceeds a preset time period.

The handing over the mobile terminal to the monitored cell, regardless of whether a current network connection state of the mobile terminal is in an idle state includes: if the current network connection state of the mobile terminal is in an idle state, handing over a network mode of the mobile terminal to the top-priority-network, and initiating a login request to the monitored cell to reside on the top-priority-network; and
if the current network connection state of the mobile terminal is in an in-connection state, initiating a Public Land Mobile Network selection, handing over a network mode of the mobile terminal to the top-priority-network, and initiating a login request to the monitored cell to reside on the top-priority-network.

Optionally, the preset rule includes:
defining a Long Term Evolution network to which the mobile terminal belongs as the top-priority-network.

According to a second aspect, the present disclosure relates to an apparatus for selecting a network described herein and defined in claim 3, including:
a cell recording module, configured to, when a mobile terminal is unable to reside on a top-priority-network, record a cell of the top-priority-network that the mobile terminal is currently unable to reside on, wherein the top-priority-network is determined based on a rule preset in the mobile terminal;
a top-priority-network monitoring module, configured to, monitor the top-priority-network when the mobile terminal is residing on a non-top-priority-network;
a top-priority-network judging module, configured to, if the top-priority-network monitoring module monitors a cell of the top-priority-network and a relationship between the monitored cell and the previously recorded cell satisfies a preset condition, trigger a cell handover module; and
the cell handover module, configured to hand over the mobile terminal to the monitored cell, regardless of whether a current network connection state of the mobile terminal is in an idle state.

The preset condition includes:
the monitored cell not being the previously recorded cell.

The preset condition includes:
the monitored cell being the previously recorded cell, and an interval between a current time and a time when the mobile terminal left the previously recorded cell exceeds a preset time period.

The cell handover module includes:
a connection state judging sub-module configured to judge whether the current network connection state of the mobile terminal is in an idle state, and trigger a first handover sub-module if it is in an idle state, and trigger a second handover sub-module if it is in an in-connection state;
the first handover sub-module configured to hand over a network mode of the mobile terminal to the top-priority-network, and initiate a login request to the monitored cell to reside on the top-priority-network; and
the second handover sub-module configured to initiate a Public Land Mobile Network selection, hand over a network mode of the mobile terminal to the top-priority-network, and initiate a login request to the monitored cell to reside on the top-priority-network.

Optionally, the preset rule includes:
defining a Long Term Evolution network to which the mobile terminal belongs as the top-priority-network.

According to a third aspect, the present disclosure relates to a computer readable-storage medium comprising instructions executable by a processor of an apparatus for selecting a network described herein and defined in claim 5.

In one particular embodiment, the steps of the method for selecting a network are determined by computer program instructions.

Consequently, according to a fourth aspect, the present disclosure is also directed to a computer program described herein and defined in claim 6.

This program can use any programming language and take the form of source code, object code or a code intermediate between source code and object code, such as a partially compiled form, or any other desirable form.

The present disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present disclosure may have the following beneficial effects.

In embodiments of the present disclosure, when a mobile terminal is unable to reside on a top-priority-network due to certain reasons, the mobile terminal records a cell of the top-priority-network that the mobile terminal is currently unable to reside on, wherein the top-priority-network is determined based on a rule preset in the mobile terminal; and then if a cell of the top-priority-network is monitored and a relationship between the monitored cell and the previously recorded cell satisfies a preset condition, the mobile terminal is handed over to the monitored cell, regardless of whether a current network connection state of the mobile terminal is in an idle state. In embodiments of the present disclosure, since the mobile terminal learns about whether the current network is the top-priority-network without relying on identifiers at the network side, and eliminate the dependency on the network side, so that the mobile terminal can quickly return to a network with substantially higher priority in a case where the network side does not provide identifiers on priority. Meanwhile, the mobile terminal can determine whether the top-priority-network can be returned to currently, by recording the left cell of the top-priority-network and judging the monitored new cell of the top-priority-network. The mobile terminal itself is forced to return to the top-priority-network after the above determination. Therefore, the mobile terminal may quickly return to a network with substantially higher priority in a case where the network side does not provide identifiers on priority.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for selecting a network according to an exemplary embodiment;
Fig. 2 is a schematic diagram showing an old cell and a new cell according to an exemplary embodiment;
Fig. 3 is a flow chart showing a method for selecting a network according to an exemplary embodiment;
Fig. 4 is a flow chart showing a method for selecting a network according to an exemplary embodiment;
Fig. 5 is a block diagram showing an apparatus for selecting a network according to an exemplary embodiment;
Fig. 6 is a block diagram showing an apparatus for selecting a network according to an exemplary embodiment; and
Fig. 7 is a block diagram showing an apparatus for selecting a network according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

A mobile terminal herein may be a mobile phone, a tablet PC, an e-book reader, a MP3 (Moving Picture Experts Group Audio Layer III) player, a MP4 (Moving Picture Experts Group Audio Layer IV) player, a portable laptop computer, or the like.

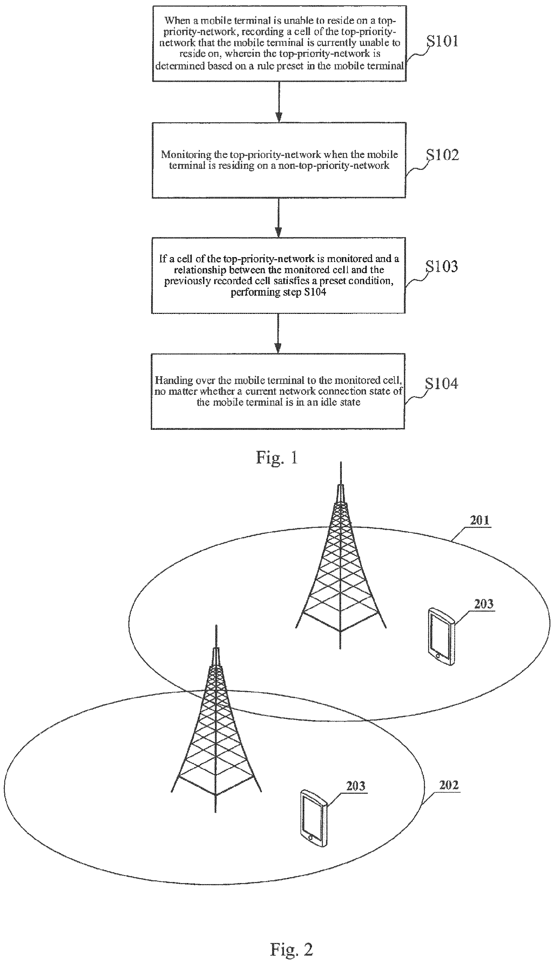

Fig. 1 is a flow chart showing a method for selecting a network according to an exemplary embodiment. The method may be applied in a mobile terminal, such as a cell phone or the like. As shown in Fig. 1, the method may include the following steps.

In step S101, when a mobile terminal is unable to reside on a top-priority-network, a cell of the top-priority-network that the mobile terminal is currently unable to reside on is recorded, wherein the top-priority-network is determined based on a rule preset in the mobile terminal.

In the present embodiment, when the mobile terminal judges priority of a searched network, it eliminates the dependency on the network side. That is, the mobile terminal may determine whether a network is the top-priority-network only based on its preset rule, without relying on identifiers on priority at the network side.

The content of the preset role is not limited in the embodiment of the present disclosure. For example, it may be provided that priority of 2G, 3G and 4G is gradually higher and 4G is the top-priority-network. None of the rules which may be used herein departs from the scope of the present disclosure as defined by the claims.

As an example, the preset rule may include:
defining a Long Term Evolution network to which the mobile terminal belongs as the top-priority-network.

In the present embodiment, the mobile terminal resides on a cell of the top-priority-network. However, due to certain reasons such as CSFB (Circuit Switched Fallback), weak signal coverage, congestion, network problems or the like, the mobile terminal is unable to reside on the top-priority-network. In the present embodiment, the mobile terminal may record the cell before leaving the cell, after leaving the cell or while leaving the cell. For example, identification of the cell, reason for leaving or the like may be recorded. The recorded content is not a limitation of the present disclosure.

In step S102, the top-priority-network is monitored when the mobile terminal is residing on a non-top-priority-network.

After the mobile terminal has to leave the top-priority-network and resides on a non-top-priority-network, the top-priority-network may be monitored, so that the mobile terminal may timely return to the top-priority-network under mature conditions.

In step S103, if a cell of the top-priority-network is monitored and a relationship between the monitored cell and the previously recorded cell satisfies a preset condition, step S104 is performed.

On the other hand, if a cell of the top-priority-network is not monitored or if a cell of the top-priority-network is monitored but a relationship between the monitored cell and the previously recorded cell does not satisfy a preset condition, step S104 is not performed. The mobile terminal may for example still reside on the current non-top-priority-network.

In step S104, regardless of whether a current network connection state of the mobile terminal is in an idle state, the mobile terminal is handed over to the monitored cell.

As an example, in the present embodiment or other optional embodiments of the present disclosure, the preset condition may include:
the monitored cell not being the previously recorded cell.

If the previously recorded cell is referred to as an old cell, the monitored cell is referred to as a new cell. As shown in Fig. 2, the numeral 203 represents a mobile terminal, a cell 201 is an old cell, and a cell 202 is a new cell. The two cells are different cells. The mobile terminal 203 was in the old cell 201 previously, and then moves to the new cell 202.

Since problems such as congestion or the like exist in the old cell when the mobile terminal has to leave the old cell, the old cell should be avoided. However, if a currently found new cell is no longer the old cell, it is reasonable to hand over the mobile terminal to the new cell, so that the mobile terminal may return to the top-priority-network as quickly as possible. In addition, it should be easily understood that a small probability case where problems such as congestion or the like also exist in the new cell will not be discussed in the present disclosure.

As an example, in the present embodiment or other optional embodiments of the present disclosure, the preset condition may also include:
the monitored cell being the previously recorded cell, and an interval between a current time and a time when the mobile terminal left the previously recorded cell exceeds a preset time period.

The preset time period may also be referred to as an avoiding time period. If the monitored cell is the old cell, but an interval between a current time and a time when the mobile terminal left the old cell is long enough, i.e. exceeds a preset time period, there is a reason to believe that problems such as congestion or the like in the old cell have been solved, which is no longer to be avoided. Therefore, it is also reasonable to hand over the mobile terminal back to the old cell, so that the mobile terminal may return to the top-priority-network as quickly as possible.

A length of the preset time period is not limiting in the present embodiment. Those skilled in the art may preset the time period as for example 5 minutes, 10 minutes or the like according to different scenarios. In addition, it should be easily understood that a small probability case where problems such as congestion or the like still exist in the old cell after the preset time period will not be discussed in the present disclosure.

In addition, as for other special situations, for example, at least two cells of the top-priority-network are monitored at the same time, which include both a new cell and an old cell satisfying preset time period requirement. At this time, after ranking the cells based on factors such as signal strength, communication quality or the like, one of the cells may be selectively selected as a cell to be resided on, which will not be repeated herein.

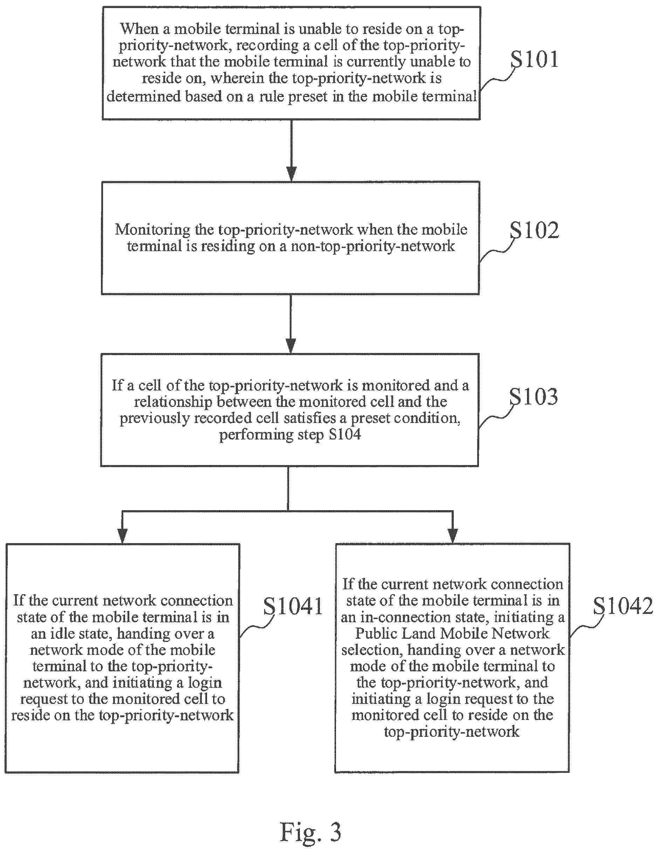

As shown in Fig. 3, in the present embodiment or other optional embodiments of the present disclosure, the step S104 may include following steps.

In step S1041, if the current network connection state of the mobile terminal is in an idle state, a network mode of the mobile terminal is handed over to the top-priority-network, and a login request to the monitored cell is initiated to reside on the top-priority-network.

In step S1042, if the current network connection state of the mobile terminal is in an in-connection state, a PLMN (Public Land Mobile Network) selection is initiated, a network mode of the mobile terminal is handed over to the top-priority-network, and a login request to the monitored cell is initiated to reside on the top-priority-network.

Initiating a PLMN selection is a command to its own underlying module performed by the mobile terminal. If the current network connection state of the mobile terminal is in an in-connection state, initiating a PLMN selection will compulsorily disconnect the network and then reselect a network. However, in the related art, the network will not be compulsorily disconnected when the current network connection state of the mobile terminal is in an in-connection state.

In the present embodiment, when a mobile terminal is unable to reside on a top-priority-network due to certain reasons, the mobile terminal may record a cell of the top-priority-network that the mobile terminal is currently unable to reside on, wherein the top-priority-network is determined based on a rule preset in the mobile terminal; and then if a cell of the top-priority-network is monitored and a relationship between the monitored cell and the previously recorded cell satisfies a preset condition, the mobile terminal is handed over to the monitored cell, regardless of whether a current network connection state of the mobile terminal is in an idle state. In the present embodiment, since the mobile terminal may learn about whether the current network is the top-priority-network without relying on identifiers at the network side, and eliminate the dependency on the network side, so that the mobile terminal may quickly return to a network with substantially higher priority in a case where the network side does not provide identifiers on priority. Meanwhile, the mobile terminal may determine whether the top-priority-network may be returned to currently, by recording the left cell of the top-priority-network and judging the monitored new cell of the top-priority-network. The mobile terminal itself is forced to return to the top-priority-network after the above determination. Therefore, the mobile terminal may quickly return to a network with substantially higher priority in a case where the network side does not provide identifiers on priority.

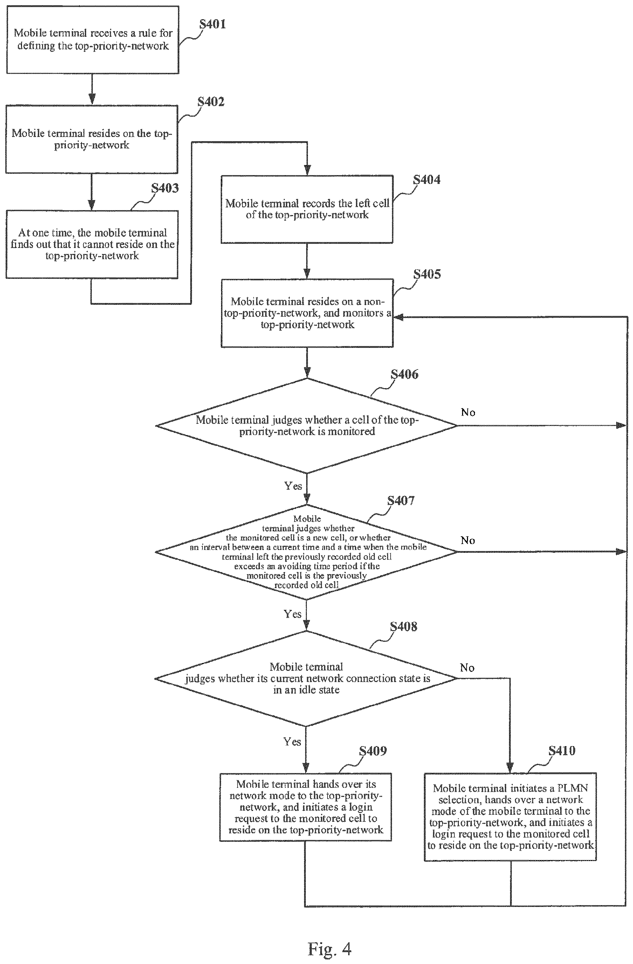

As shown in Fig. 4, Fig. 4 is a flow chart showing a method for selecting a network according to an exemplary embodiment.

In step S401, the mobile terminal receives a rule for defining the top-priority-network.

For example, the mobile terminal may receive the rule when leaving a factory, to preset the rule in the mobile terminal. The user may also define the rule in the mobile terminal through operation during the use of the terminal.

In step S402, the mobile terminal resides on the top-priority-network.

In step S403, at one time, the mobile terminal finds that it cannot reside on the top-priority-network, due to reasons such as CSFB, weak signal coverage, congestion, network problems or the like.

In step S404, the mobile terminal records the left cell of the top-priority-network.

In step S405, the mobile terminal resides on a non-top-priority-network, and monitors a top-priority-network.

In step S406, the mobile terminal judges whether a cell of the top-priority-network is monitored. If it is monitored, proceed to step S407. If it is not monitored, return to step S405.

In step S407, the mobile terminal judges whether the monitored cell is a new cell, or whether an interval between a current time and a time when the mobile terminal left the previously recorded old cell exceeds an avoiding time period if the monitored cell is the previously recorded old cell.

If the monitored cell is a new cell, or an interval between a current time and a time when the mobile terminal left the previously recorded old cell has exceeded an avoiding time period if the monitored cell is the previously recorded old cell, proceed to step S408, otherwise, return step S405.

In step S408, the mobile terminal judges whether its current network connection state is in an idle state. If it is in an idle state, proceed to step S409, otherwise, proceed to step S410.

In step S409, the mobile terminal hands over its network mode to the top-priority-network, and initiates a login request to the monitored cell to reside on the top-priority-network, and then returns to step S402.

In step S410, the mobile terminal initiates a PLMN selection, hands over a network mode of the mobile terminal to the top-priority-network, and initiates a login request to the monitored cell to reside on the top-priority-network, and then returns to step S402.

In the present embodiment, when a mobile terminal is unable to reside on a top-priority-network due to certain reasons, the mobile terminal may record a cell of the top-priority-network that the mobile terminal is currently unable to reside on, wherein the top-priority-network is determined based on a rule preset in the mobile terminal; and then if a cell of the top-priority-network is monitored and a relationship between the monitored cell and the previously recorded cell satisfies a preset condition, the mobile terminal is handed over to the monitored cell, regardless of whether a current network connection state of the mobile terminal is in an idle state. In the present embodiment, since the mobile terminal may learn about whether the current network is the top-priority-network without relying on identifiers at the network side, and eliminate the dependency on the network side, so that the mobile terminal may quickly return to a network with substantially higher priority in a case where the network side does not provide identifiers on priority. Meanwhile, the mobile terminal may determine whether the top-priority-network may be returned to currently, by recording the left cell of the top-priority-network and judging the monitored new cell of the top-priority-network. The mobile terminal itself is forced to return to the top-priority-network after the above determination. Therefore, the mobile terminal may quickly return to a network with substantially higher priority in a case where the network side does not provide identifiers on priority.

The following is embodiments of apparatuses according to the present disclosure, which may be configured to perform the embodiments of methods of the present disclosure. Details not disclosed in the embodiments of apparatuses may be referred to the embodiments of methods.

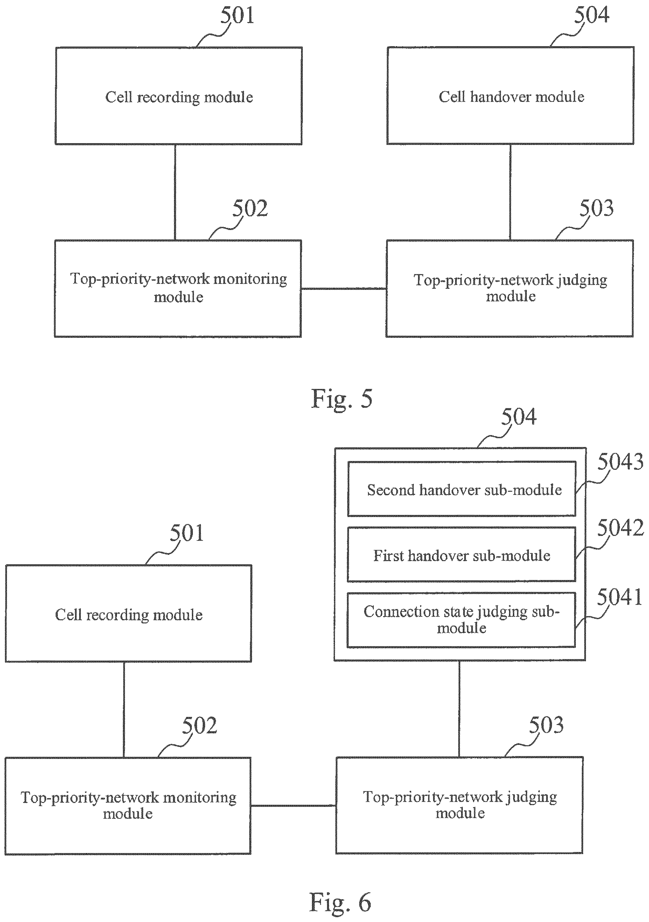

Fig. 5 is a block diagram showing an apparatus for selecting a network according to an exemplary embodiment. The apparatus may include: a cell recording module 501, a top-priority-network monitoring module 502, a top-priority-network judging module 503 and a cell handover module 504.

The cell recording module 501 is configured to, when a mobile terminal is unable to reside on a top-priority-network, record a cell of the top-priority-network that the mobile terminal is currently unable to reside on, wherein the top-priority-network is determined based on a rule preset in the mobile terminal.

The top-priority-network monitoring module 502 is configured to monitor the top-priority-network when the mobile terminal is residing on a non-top-priority-network.

The top-priority-network judging module 503 is configured to, if the top-priority-network monitoring module 502 monitors a cell of the top-priority-network and a relationship between the monitored cell and the previously recorded cell satisfies a preset condition, trigger a cell handover module 504.

The cell handover module 504 is configured to hand over the mobile terminal to the monitored cell, regardless of whether a current network connection state of the mobile terminal is in an idle state.

In the present embodiment or other optional embodiments of the present disclosure, the preset condition may include:
the monitored cell not being the previously recorded cell.

In the present embodiment or other optional embodiments of the present disclosure, the preset condition may include:
the monitored cell being the previously recorded cell, and an interval between a current time and a time when the mobile terminal left the previously recorded cell exceeds a preset time period.

As shown in Fig. 6, in the present embodiment or other optional embodiments of the present disclosure, the cell handover module 504 may include: a connection state judging sub-module 5041, a first handover sub-module 5042 and a second handover sub-module 5043.

The connection state judging sub-module 5041 is configured to judge whether the current network connection state of the mobile terminal is in an idle state, trigger the first handover sub-module 5042 if it is in an idle state, and trigger the second handover sub-module 5043 if it is in an in-connection state.

The first handover sub-module 5042 is configured to hand over a network mode of the mobile terminal to the top-priority-network, and initiate a login request to the monitored cell to reside on the top-priority-network.

The second handover sub-module 5043 is configured to initiate a Public Land Mobile Network (PLMN) selection, hand over a network mode of the mobile terminal to the top-priority-network, and initiate a login request to the monitored cell to reside on the top-priority-network.

In the present embodiment or other optional embodiments of the present disclosure, the preset rule may include:
defining a Long Term Evolution (LTE) network to which the mobile terminal belongs as the top-priority-network.

In the present embodiment, when a mobile terminal is unable to reside on a top-priority-network due to certain reasons, the mobile terminal may record a cell of the top-priority-network that the mobile terminal is currently unable to reside on, wherein the top-priority-network is determined based on a rule preset in the mobile terminal; and then if a cell of the top-priority-network is monitored and a relationship between the monitored cell and the previously recorded cell satisfies a preset condition, the mobile terminal is handed over to the monitored cell, regardless of whether a current network connection state of the mobile terminal is in an idle state. In the present embodiment, since the mobile terminal may learn about whether the current network is the top-priority-network without relying on identifiers at the network side, and eliminate the dependency on the network side, so that the mobile terminal may quickly return to a network with substantially higher priority in a case where the network side does not provide identifiers on priority. Meanwhile, the mobile terminal may determine whether the top-priority-network may be returned to currently, by recording the left cell of the top-priority-network and judging the monitored new cell of the top-priority-network. The mobile terminal itself is forced to return to the top-priority-network after the above determination. Therefore, the mobile terminal may quickly return to a network with substantially higher priority in a case where the network side does not provide identifiers on priority.

With respect to the apparatuses in the above embodiments, the specific manners for performing operations for individual modules therein have been described in detail in the embodiments regarding the methods, which will not be elaborated herein.

The present disclosure also provides an apparatus for selecting a network, including:
a processor; and
a memory for storing instructions executable by the processor,
wherein the processor is configured to perform:
   when a mobile terminal is unable to reside on a top-priority-network, recording a cell of the top-priority-network that the mobile terminal is currently unable to reside on, wherein the top-priority-network is determined based on a rule preset in the mobile terminal;
   monitoring the top-priority-network when the mobile terminal is residing on a non-top-priority-network; and
   if a cell of the top-priority-network is monitored and a relationship between the monitored cell and the previously recorded cell satisfies a preset condition, handing over the mobile terminal to the monitored cell, regardless of whether a current network connection state of the mobile terminal is in an idle state.

The present disclosure also provides a non-transitory computer readable storage medium which, when instructions in the storage medium are executed by a processor of a mobile terminal, enables the mobile terminal to perform the method for selecting a network, including:
when a mobile terminal is unable to reside on a top-priority-network, recording a cell of the top-priority-network that the mobile terminal is currently unable to reside on, wherein the top-priority-network is determined based on a rule preset in the mobile terminal;
monitoring the top-priority-network when the mobile terminal is residing on a non-top-priority-network; and
if a cell of the top-priority-network is monitored and a relationship between the monitored cell and the previously recorded cell satisfies a preset condition, handing over the mobile terminal to the monitored cell, regardless of whether a current network connection state of the mobile terminal is in an idle state.

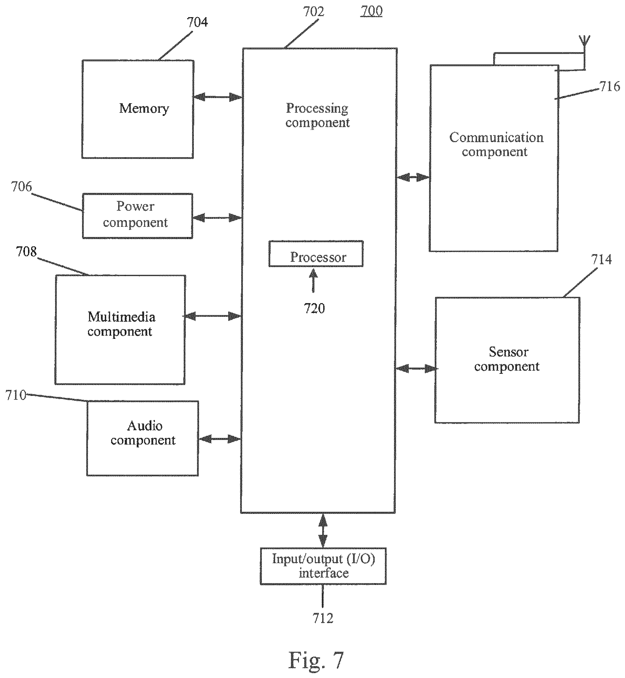

Fig. 7 is a block diagram showing an apparatus for selecting a network according to an exemplary embodiment. The apparatus is an apparatus 700 in the figure. For example, the apparatus 700 may be a mobile phone, a computer, a digital broadcast terminal, a messaging device, a gaming console, a tablet, a medical device, exercise equipment, a personal digital assistant, and the like.

Referring to Fig. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the apparatus 700. Examples of such data include instructions for any applications or methods operated on the apparatus 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 may include a power management system, one or more power sources, and any other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the apparatus 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the apparatus 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the apparatus 700. For instance, the sensor component 714 may monitor an open/closed status of the apparatus 700, relative positioning of components, e.g., the display and the keypad, of the apparatus 700, a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to monitor the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the apparatus 700 and other devices. The apparatus 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods at a terminal side.

## Claims

1. A method for selecting a network, comprising:
upon a mobile terminal residing on a top-priority-network finding it is unable to remain residing on the top-priority-network, recording (S101), at the mobile terminal, a cell of the top-priority-network that the mobile terminal is currently unable to reside on, wherein the top-priority-network is determined based on a rule preset in the mobile terminal;
monitoring (S102), at the mobile terminal, the top-priority-network when the mobile terminal is residing on a non-top-priority-network; and
in case that a cell of the top-priority-network is monitored and a relationship between the monitored cell and the previously recorded cell is determined, at the mobile terminal, to satisfy (S103) a preset condition, causing, at the mobile terminal, a handing over (S104) of the mobile terminal to the monitored cell, regardless of whether a current network connection state of the mobile terminal is in an idle state;
**characterised in that** the preset condition comprises:
the monitored cell not being the previously recorded cell, or
the monitored cell being the previously recorded cell, and an interval between a current time and a time when the mobile terminal left the previously recorded cell exceeds a preset time period; and
wherein the handing over (S104) the mobile terminal to the monitored cell, regardless of whether a current network connection state of the mobile terminal is in an idle state comprises:
in case that the current network connection state of the mobile terminal is in an idle state, handing over (S1041) a network mode of the mobile terminal to the top-priority-network, and
initiating a login request to the monitored cell to reside on the top-priority-network; and
in case that the current network connection state of the mobile terminal is in an in-connection state, initiating (S1042) a Public Land Mobile Network, PLMN, selection, handing over a network mode of the mobile terminal to the top-priority-network, and initiating a login request to the monitored cell to reside on the top-priority-network.

2. The method of claim 1, wherein the preset rule comprises:
defining a Long Term Evolution, LTE, network to which the mobile terminal belongs as the top-priority-network.

3. An apparatus in a mobile terminal for selecting a network, comprising:
a cell recording module (501) configured to, when a mobile terminal residing upon a top-priority network is unable to remain residing on the top-priority-network, record a cell of the top-priority-network that the mobile terminal is currently unable to reside on, wherein the top-priority-network is determined based on a rule preset in the mobile terminal;
a top-priority-network monitoring module (502), configured to, monitor the top-priority-network when the mobile terminal is residing on a non-top-priority-network;
a top-priority-network judging module (503), configured to, in case that the top-priority-network monitoring module monitors a cell of the top-priority-network and a relationship between the monitored cell and the previously recorded cell satisfies a preset condition, trigger a cell handover module; and
the cell handover module (504), configured to hand over the mobile terminal to the monitored cell, regardless of whether a current network connection state of the mobile terminal is in an idle state;
**characterised in that** the preset condition comprises:
the monitored cell not being the previously recorded cell, or
the monitored cell being the previously recorded cell, and an interval between a current time and a time when the mobile terminal left the previously recorded cell exceeds a preset time period; and
wherein the cell handover module comprises:
a connection state judging sub-module (5041), configured to judge whether the current network connection state of the mobile terminal is in an idle state, and trigger a first handover sub-module (5042) in case that it is in an idle state, and trigger a second handover sub-module (5043) in case that it is in an in-connection state;
the first handover sub-module (5042) configured to hand over a network mode of the mobile terminal to the top-priority-network, and initiate a login request to the monitored cell to reside on the top-priority-network; and
the second handover sub-module (5043) configured to initiate a Public Land Mobile Network, PLMN, selection, hand over a network mode of the mobile terminal to the top-priority-network, and initiate a login request to the monitored cell to reside on the top-priority-network.

4. The apparatus of claim 3, wherein the preset rule comprises:
defining a Long Term Evolution, LTE, network to which the mobile terminal belongs as the top-priority-network.

5. A computer-readable storage medium comprising instructions executable by a processor of an apparatus in a mobile terminal for selecting a network,
wherein the instructions cause the processor to perform the method according to any one of claims 1 to 2.

6. A computer program, comprising computer program code means adapted to perform all the steps of the method according to any one of claims 1 to 2 when said program is run on a computer.

## Patentansprüche

1. Verfahren zum Auswählen eines Netzwerks, umfassend:
sobald ein Mobilendgerät, das auf einem Höchstprioritätsnetzwerk verweilt, feststellt, dass es nicht im Stande ist, weiterhin auf dem Höchstprioritätsnetzwerk zu verweilen, Aufzeichnen (S101), bei dem Mobilendgerät, einer Zelle des Höchstprioritätsnetzwerks, auf der das Mobilendgerät aktuell nicht im Stande ist zu verweilen, wobei das Höchstprioritätsnetzwerk basierend auf einer in dem Mobilendgerät voreingestellten Regel ermittelt ist;
Überwachen (S102), bei dem Mobilendgerät, des Höchstprioritätsnetzwerks, wenn das Mobilendgerät auf einem Nicht-Höchstprioritätsnetzwerk verweilt; und
im Fall, dass eine Zelle des Höchstprioritätsnetzwerks überwacht wird und eine Beziehung zwischen der überwachten Zelle und der zuvor bei dem Mobilendgerät aufgezeichneten Zelle ermittelt ist, eine voreingestellte Bedingung zu erfüllen (S103), Veranlassen, bei dem Mobilendgerät, einer Übergabe (S104) des Mobilendgeräts an die überwachte Zelle, ungeachtet dessen, ob ein aktueller Netzwerkverbindungszustand des Mobilendgeräts in einem Ruhezustand ist;
**dadurch gekennzeichnet, dass** die voreingestellte Bedingung umfasst:
die überwachte Zelle nicht die zuvor aufgezeichnete Zelle ist oder
die überwachte Zelle die zuvor aufgezeichnete Zelle ist und ein Intervall zwischen einer aktuellen Zeit und einer Zeit, wenn das Mobilendgerät die zuvor aufgezeichnete Zelle verlassen hat, eine voreingestellte Zeitdauer übersteigt; und
wobei die Übergabe (S104) des Mobilendgeräts an die überwachte Zelle, ungeachtet dessen, ob ein aktueller Netzwerkverbindungszustand des Mobilendgeräts in einem Ruhezustand ist, umfasst:
im Fall, dass der aktuelle Netzwerkverbindungszustand des Mobilendgeräts in einem Ruhezustand ist, Übergeben (S1041) eines Netzwerkmodus des Mobilendgeräts an das Höchstprioritätsnetzwerk und Initiieren einer Anmeldeanfrage an die überwachte Zelle, auf dem Höchstprioritätsnetzwerk zu verweilen; und
im Fall, dass der aktuelle Netzwerkverbindungszustand des Mobilendgeräts in einem In-Verbindung-Zustand ist, Initiieren (S1042) einer Auswahl eines öffentlichen terrestrischen Mobilnetzes, PLMN, Übergeben eines Netzwerkmodus des Mobilendgeräts an das Höchstprioritätsnetzwerk und Initiieren einer Anmeldeanfrage an die überwachte Zelle, auf dem Höchstprioritätsnetzwerk zu verweilen.

2. Verfahre nach Anspruch 1, wobei die voreingestellte Regel umfasst:
Definieren eines Long-Term-Evolution-, LTE, -Netzwerks, zu dem das Mobilendgerät gehört, als das Höchstprioritätsnetzwerk.

3. Einrichtung in einem Mobilendgerät zum Auswählen eines Netzwerks, umfassend:
ein Zellaufzeichnungsmodul (501), das konfiguriert ist, wenn ein Mobilendgerät, das auf einem Höchstprioritätsnetzwerk verweilt, nicht im Stande ist, auf dem Höchstprioritätsnetzwerk zu bleiben, eine Zelle des Höchstprioritätsnetzwerks aufzuzeichnen, auf dem das Mobilendgerät aktuell nicht im Stande ist zu verweilen, wobei das Höchstprioritätsnetzwerk basierend auf einer Regel ermittelt ist, die in dem Mobilendgerät voreingestellt ist;
ein Höchstprioritätsnetzwerküberwachungsmodul (502), das konfiguriert ist, das Höchstprioritätsnetzwerk zu überwachen, wenn das Mobilendgerät auf einem Nicht-Höchstprioritätsnetzwerk verweilt;
ein Höchstprioritätsnetzwerksbeurteilungsmodul (503), das konfiguriert ist, in dem Fall, dass das Höchstprioritätsnetzwerküberwachungsmodul eine Zelle des Höchstprioritätsnetzwerks überwacht und eine Beziehung zwischen der überwachten Zelle und der zuvor aufgezeichneten Zelle eine voreingestellte Bedingung erfüllt, ein Zellübergabemodul auszulösen; und
das Zellübergabemodul (504), das konfiguriert ist, das Mobilendgerät an die überwachte Zelle zu übergeben, ungeachtet dessen, ob ein aktueller Netzwerkverbindungszustand des Mobilendgeräts in einem Ruhezustand ist;
**dadurch gekennzeichnet, dass** der voreingestellte Zustand umfasst:
die überwachte Zelle nicht die zuvor aufgezeichnete Zelle ist oder
die überwachte Zelle die zuvor aufgezeichnete Zelle ist und ein Intervall zwischen einer aktuellen Zeit und einer Zeit, wenn das Mobilendgerät die zuvor aufgezeichnete Zelle verlassen hat, eine voreingestellte Zeitdauer übersteigt; und
wobei das Zellübergabemodul umfasst:
ein Verbindungszustandsbeurteilungsteilmodul (5041), das konfiguriert ist, zu beurteilen, ob der aktuelle Netzwerkverbindungszustand des Mobilendgeräts in einem Ruhezustand ist und ein erstes Übergabeteilmodul (5042) in dem Fall auszulösen, dass er in einem Ruhezustand ist und ein zweites Übergabeteilmodul (5043) auszulösen, in dem Fall, dass er in einem In-Verbindung-Zustand ist;
das erste Übergabeteilmodul (5042) konfiguriert ist, einen Netzwerkmodus des Mobilendgeräts an das Höchstprioritätsnetzwerk zu übergeben und eine Anmeldeanfrage an die überwachte Zelle zu initiieren, auf dem Höchstprioritätsnetzwerk zu verweilen; und
das zweite Übergabeteilmodul (5043) konfiguriert ist, eine Auswahl eines öffentlichen terrestrischen Mobilnetzes, PLMN, zu initiieren, einen Netzwerkmodus des Mobilendgeräts an das Höchstprioritätsnetzwerk zu übergeben und eine Anmeldeanfrage an die überwachte Zelle zu initiieren, auf dem Höchstprioritätsnetzwerk zu verweilen.

4. Einrichtung nach Anspruch 3, wobei die voreingestellte Regel umfasst:
Definieren eines Long-Term-Evolution-, LTE, -Netzwerks, zu dem das Mobilendgerät gehört, als das Höchstprioritätsnetzwerk.

5. Computerlesbares Speichermedium, umfassend Anweisungen, die von einem Prozessor einer Einrichtung in einem Mobilendgerät zum Auswählen eines Netzwerks ausführbar sind,
wobei die Anweisungen den Prozessor veranlassen, das Verfahren nach einem der Ansprüche 1 bis 2 durchzuführen.

6. Computerprogramm, umfassend Computerprogrammcodemittel, die angepasst sind, all die Schritte des Verfahrens nach einem der Ansprüche 1 bis 2 durchzuführen, wenn das Programm auf einem Computer läuft.

## Revendications

1. Procédé de sélection d'un réseau, comprenant les étapes consistant à :
lorsqu'un terminal mobile résidant sur un réseau à priorité maximale trouve qu'il est incapable de continuer à résider sur le réseau à priorité maximale, enregistrer (S101), au niveau du terminal mobile, une cellule du réseau à priorité maximale sur laquelle le terminal mobile est actuellement incapable de résider, dans lequel le réseau à priorité maximale est déterminé sur la base d'une règle prédéfinie dans le terminal mobile ;
surveiller (S102), au niveau du terminal mobile, le réseau à priorité maximale lorsque le terminal mobile réside sur un réseau non à priorité maximale ; et
dans le cas où une cellule du réseau à priorité maximale est surveillée et une relation entre la cellule surveillée et la cellule précédemment enregistrée est déterminée, au niveau du terminal mobile, satisfaire (S103) à une condition prédéfinie, amenant, au niveau du terminal mobile, une délivrance (S104) du terminal mobile à la cellule surveillée, qu'un état de connexion de réseau actuel du terminal mobile soit ou non dans un état inactif ;
**caractérisé en ce que** la condition prédéfinie comprend :
la cellule surveillée n'étant pas la cellule précédemment enregistrée, ou
la cellule surveillée étant la cellule précédemment enregistrée, et un intervalle entre un moment actuel et un moment où le terminal mobile a quitté la cellule précédemment enregistrée dépasse une période de temps prédéfinie ; et
dans lequel la délivrance (S104) du terminal mobile à la cellule surveillée, qu'un état de connexion de réseau actuel du terminal mobile soit ou non dans un état inactif, comprend :
dans le cas où l'état de connexion de réseau actuel du terminal mobile est dans un état inactif, délivrer (S1041) un mode de réseau du terminal mobile au réseau à priorité maximale, et mettre en œuvre une demande d'authentification à la cellule surveillée pour résider sur le réseau à priorité maximale ; et
dans le cas où l'état de connexion de réseau actuel du terminal mobile est dans un état connecté, mettre en œuvre (S1042) une sélection de Réseau mobile terrestre public, PLMN, délivrant un mode de réseau du terminal mobile au réseau à priorité maximale, et mettre en œuvre une demande d'authentification à la cellule surveillée pour résider sur le réseau à priorité maximale.

2. Procédé selon la revendication 1, dans lequel la règle prédéfinie comprend :
la définition d'un réseau Long Term Evolution, LTE, auquel le terminal mobile appartient en tant que le réseau à priorité maximale.

3. Appareil dans un terminal mobile de sélection d'un réseau, comprenant :
un module d'enregistrement de cellule (501) configuré pour, lorsqu'un terminal mobile résidant sur un réseau à priorité maximale est incapable de continuer à résider sur le réseau à priorité maximale, enregistrer une cellule du réseau à priorité maximale sur laquelle le terminal mobile est actuellement incapable de résider, dans lequel le réseau à priorité maximale est déterminé sur la base d'une règle prédéfinie dans le terminal mobile ;
un module de surveillance de réseau à priorité maximale (502), configuré pour surveiller le réseau à priorité maximale lorsque le terminal mobile réside sur un réseau non à priorité maximale ;
un module d'estimation de réseau à priorité maximale (503), configuré pour, dans le cas où le module de surveillance de réseau à priorité maximale surveille une cellule du réseau à priorité maximale et une relation entre la cellule surveillée et la cellule précédemment enregistrée satisfait à une condition prédéfinie, déclencher un module de délivrance de cellule ; et
le module de délivrance de cellule (504), configuré pour délivrer le terminal mobile à la cellule surveillée, qu'un état de connexion de réseau actuel du terminal mobile soit ou non dans un état inactif ;
**caractérisé en ce que** la condition prédéfinie comprend :
la cellule surveillée n'étant pas la cellule précédemment enregistrée, ou
la cellule surveillée étant la cellule précédemment enregistrée, et un intervalle entre un moment actuel et un moment où le terminal mobile a quitté la cellule précédemment enregistrée dépasse une période de temps prédéfinie ; et
dans lequel le module de délivrance de cellule comprend :
un sous-module d'estimation d'état de connexion (5041), configuré pour estimer si l'état de connexion de réseau actuel du terminal mobile est dans un état inactif, et déclencher un premier sous-module de délivrance (5042) dans le cas où il est dans un état inactif, et déclencher un second sous-module de délivrance (5043) dans le cas où il est dans un état connecté ;
le premier sous-module de délivrance (5042) configuré pour délivrer un mode de réseau du terminal mobile au réseau à priorité maximale, et mettre en œuvre une demande d'authentification à la cellule surveillée pour résider sur le réseau à priorité maximale ; et
le second sous-module de délivrance (5043) configuré pour mettre en œuvre une sélection de Réseau mobile terrestre public, PLMN, délivrer un mode de réseau du terminal mobile au réseau à priorité maximale, et mettre en œuvre une demande d'authentification à la cellule surveillée pour résider sur le réseau à priorité maximale.

4. Appareil selon la revendication 3, dans lequel la règle prédéfinie comprend :
la définition d'un réseau Long Term Evolution, LTE, auquel le terminal mobile appareil en tant que le réseau à priorité maximale.

5. Support de stockage lisible par ordinateur comprenant des instructions exécutables par un processeur d'un appareil dans un terminal mobile de sélection d'un réseau,
dans lequel les instructions amènent le processeur à effectuer le procédé selon l'une quelconque des revendications 1 à 2.

6. Programme informatique, comprenant un moyen de code de programme informatique adapté pour effectuer toutes les étapes du procédé selon l'une quelconque des revendications 1 à 2 lorsque ledit programme est exécuté sur un ordinateur.
